# EUROPÄISCHE PATENTSCHRIFT

(11) **EP 2 163 345 B1**
(45) Veröffentlichungstag und Bekanntmachung des Hinweises auf die Patenterteilung: **20.02.2013**
(21) Anmeldenummer: 08016084.9
(22) Anmeldetag: 12.09.2008
(51) Int. Cl.: B25B 5/06, B25B 5/14, B23B 31/34, B23B 31/20, B24B 41/06, B24B 13/005

(54) **Spannsystem und Spanneinrichtung mit einer zentralen Aufnahme für ein zu spannendes Werkstück**
Clamping system and device with a central opening for retaining a workpiece
Système et dispositif de serrage avec un évidement central pour retenir une pièce

(43) Veröffentlichungstag der Anmeldung: 17.03.2010
(73) Patentinhaber: Schunk GmbH & Co. KG Spann- und Greiftechnik, 74348 Lauffen am Neckar (DE)
(72) Erfinder: Hoch, Andreas, 74388 Talheim (DE)
(74) Vertreter: Paul, Dieter-Alfred

(56) Entgegenhaltungen:
- WO-A-2005/011903
- DE-A1-102005 058 818
- DE-U1- 20 022 353
- FR-A- 2 413 949
- GB-A- 1 209 650
- US-A- 4 548 417
- US-A1- 2002 149 160
- US-A1- 2008 012 246

## Beschreibung

Die vorliegende Erfindung betrifft ein Spannsystem nach dem Oberbegriff von Anspruch 1 Des weiteren betrifft die Erfindung eine Spanneinrichtung zur Verwendung in einem solchen Spannsystem.

Spannsysteme dieser Art sind bekannt und werden eingesetzt, um Werkstücke oder Werkzeuge an einer Werkzeugmaschine für eine Bearbeitung zu spannen. Insbesondere bei der Bearbeitung von optischen Linsen ist es erforderlich, die flache Linse an ihrer gesamten Oberfläche zu bearbeiten. Dies macht erforderlich, die Linse mehrfach umzuspannen, was mit einem erforderlichen Rüst- und Positionierungsaufwand verbunden ist.

Ein Spannsystem der eingangs genannten Art ist aus der US-A-4,548,417 bekannt. Dieses Spannsystem umfasst ein Gestell und eine Spanneinrichtung, die eine zentrale Aufnahme für ein zu spannendes Werkstück aufweist und Spannmittel in Form von Spannbacken besitzt, um das Werkstück in der Aufnahme zu fixieren. Die Spanneinrichtung ist an dem Gestell schwenkbar angebracht, wobei die Spanneinrichtung um eine Drehachse, welche die Achse der Aufnahme senkrecht kreuzt und durch die Aufnahme verläuft, an dem Gestell drehbar gelagert ist. Entsprechend kann das gespannte Werkstück beidseitig bearbeitet werden.

Das vorbekannte Spannsystem eignet sich nur bedingt zum Spannen flacher Bauteile, wie beispielsweise von optischen Linsen oder dergleichen. Auch eine freie Bearbeitung der Oberflächen eines in den Spannbacken gehaltenen Werkstücks nur bedingt möglich.

Aufgabe der vorliegenden Erfindung ist es daher, ein Spannsystem der eingangs genannten Art so auszubilden, dass flasche Bauteile wie beispielsweise Linsen an ihrer Ober- und Unterseite mit wenig Umrüstungsaufwand bearbeitet werden können.

Diese Aufgabe wird erfindungsgemäß durch das Spannsystem nach Anspruch 1 sowie durch die Spanneinrichtung nach Anspruch 7 gelöst.

Der Erfindung liegt damit die Überlegung zugrunde, die Spanneinrichtung derart drehbar an dem Gestell des Spannsystems anzubringen, dass sie um ihre eigene Achse um 180° gedreht werden kann, ohne dass sich hierdurch die Position des gespannten flachen Bauteils ändert. In der Regel wird hierzu die Lageranordnung so getroffen sein, dass die Drehachse die Aufnahme in Bezug auf deren Längsachse etwa mittig kreuzt. Im Betrieb kann dann ein gespanntes Werkstück wie beispielsweise eine Linse in einer ersten Drehlage der Spanneinrichtung an ihrer Oberseite bearbeitet werden. Nach Fertigstellung dieser Bearbeitung wird die Spanneinrichtung um 180° gedreht, so dass auch die Werkstückrückseite von der gleichen Seite der Spanneinrichtung her wie die Oberseite bearbeitet werden kann. Im Ergebnis können die Ober- und Unterseite der Linse bearbeitet werden, ohne dass ein Umrüstvorgang erforderlich ist.

Gemäß der Erfindung ist vorgesehen, dass die Spanneinrichtung eine die Aufnahme umgebende dünnwandige Dehnbüchse aufweist, welche von wenigstens einer Druckkammer umgeben ist, die mit einem Hydraulikmittel beaufschlagbar ist, um die Dehnbüchse radial nach innen zu verformen und damit Druckkräfte auf die Aufnahme auszuüben. Mit anderen Worten wird die an sich bekannte Dehnspanntechnik zum Fixieren eines Bauteils in der Aufnahme eingesetzt. Diese hat sich in der Praxis insbesondere beim Spannen von drehangetriebenen Werkzeugen bewährt.

Ferner ist vorgesehen, dass die Spanneinrichtung einen Spannring aufweist, der außenseitig von den Spannmitteln beaufschlagt wird und insbesondere in die Dehnbüchse eingesetzt ist und der zentral die Aufnahme definiert. Dabei kann in die Aufnahme ein ringförmiger Spannrahmen eingesetzt werden. Bei dieser Ausführungsform bildet der Spannring eine Art von Zwischenring, welcher die von den Spannmitteln und insbesondere der Dehnbüchse erzeugten Spannkräfte in den Bereich der Aufnahme überträgt. Um die hierzu erforderliche Elastizität bereitzustellen, ist es zweckmäßig, in dem Spannring zu der Aufnahme hin offene radiale Schlitze auszubilden. Beispielsweise können in dem Spannring drei zu der Aufnahme hin offene radiale Schlitze ausgebildet sein, die dann zweckmäßigerweise gleichmäßig verteilt entlang des Umfanges des Spannrings vorgesehen sind. Durch diese radialen Schlitze wird der Spannring in mehrere Spannsegmente unterteilt.

Zusätzlich können beidseitig der zu der Aufnahme hin offenen radialen Schlitze jeweils wenigstens ein zu der Dehnbüchse hin offener radial Schlitz in dem Spannring ausgebildet sein. Durch diese Schlitze wird erreicht, dass der Spannring in Umfangsrichtung zusammengedrückt werden kann. Eine besonders hohe Elastizität wird erzielt, wenn sich die radialen Schlitze über nahezu die gesamte radiale Strecke zwischen dem äußeren Rand des Spannrings und der Aufnahme erstrecken.

In weiterer Ausgestaltung der Erfindung kann vorgesehen sein, dass der Spannring in den zwischen den zu der Aufnahme hin offenen radialen Schlitzen gelegenen Bereichen axiale Durchbrechungen aufweisen, die dann insbesondere kreisringsegmentförmig ausgebildet sein können. Durch diese Durchbrechungen kann die Elastizität des Spannrings noch weiter erhöht werden.

Gemäß einer weiteren Ausführungsform der Erfindung ist der Spannring symmetrisch zu der senkrecht durch seine Achse verlaufende Mittelebene ausgebildet. Durch diese Ausgestaltung wird erreicht, dass die Aufnahme stets die gleiche axiale Position einnimmt.

Weiterhin weist der Spannring an seiner Ober - und an seiner Unterseite jeweils eine konkave Auswölbung auf, so dass der Spannring insgesamt ein bikonkaves Bauteil bildet. Durch die bikonkave Ausgestaltung wird dafür eine freie Bearbeitung der beiden Oberflächen des flachen Werkstücks wie beispielsweise eine Linse erforderliche Freiraum bereitgestellt.

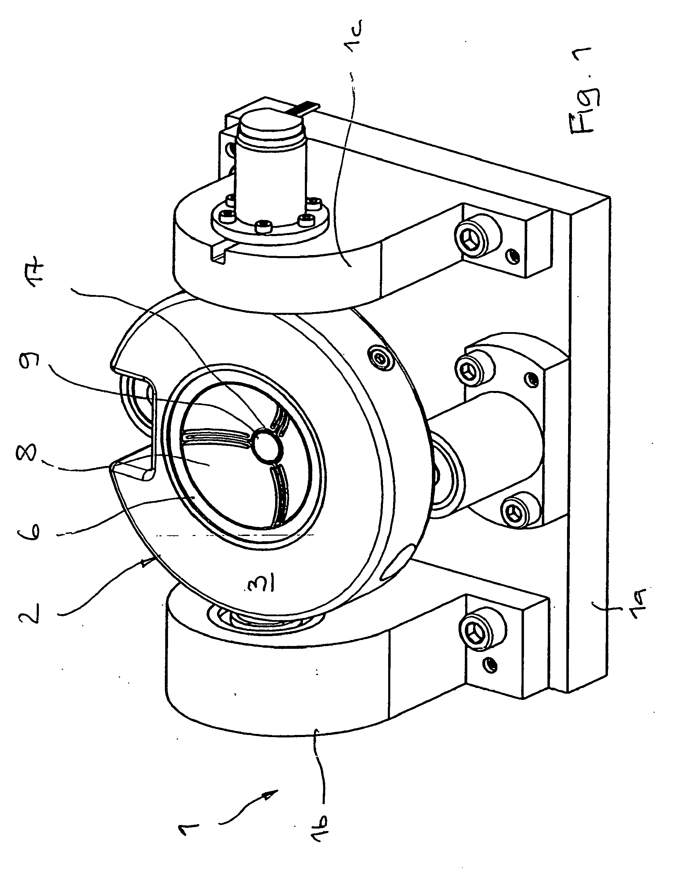

Hinsichtlich weiterer Ausgestaltungen der Erfindung wird auf die Unteransprüche sowie nachfolgende Beschreibung eines Ausführungsbeispiels unter Bezugnahme auf die beiliegende Zeichnung verwiesen. In der Zeichnung zeigt
- Figur 1: ein Spannsystem gemäß der vorliegenden Erfindung in perspektivischer Ansicht,

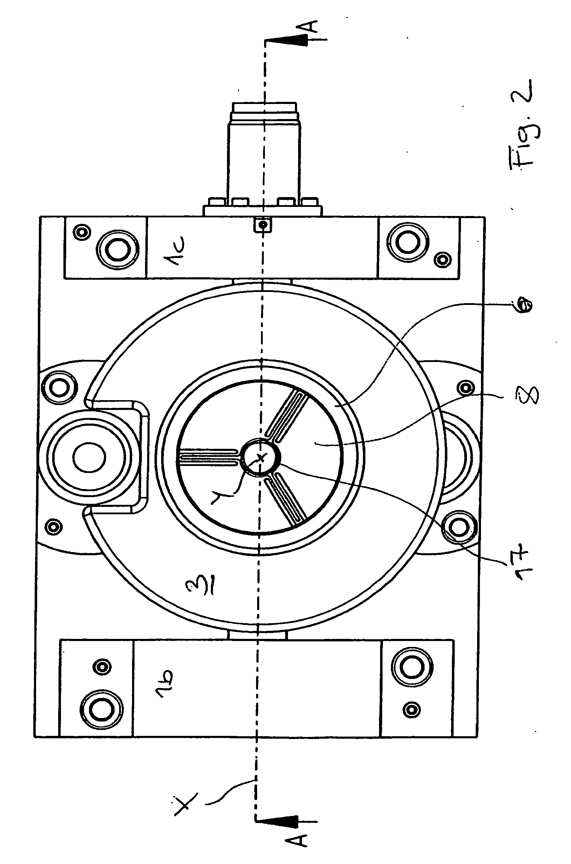

- Figur 2: das Spannsystem aus Figur 1 in Draufsicht,
- Figur 3: das Spannsystem im Schnitt entlang der Linie A-A aus Figur 2,
- Figur 4: die Vergrößerung B aus Figur 3,
- Figur 5: einen Spannring gemäß der vorliegenden Erfindung in Draufsicht,
- Figur 6: den Spannring im Schnitt entlang der Linie (A-A) aus Figur 5,
- Figur 7: den Spannring in perspektivischer Ansicht, und
- Figur 8: eine weitere Ausführungsform eines Spannsystems gemäß der vorliegenden Erfindung in Draufsicht.

In der Zeichnung ist ein Spannsystem gemäß der vorliegenden Erfindung dargestellt, das eingesetzt wird, um optische Linsen L für eine Bearbeitung in einer Werkzeugmaschine zu spannen. Das Spannsystem umfasst ein Gestell 1, das von einer Basisplatte la und zwei seitlichen Lagerböcken 1b, 1c gebildet wird. Die Bodenplatte 1a kann an dem Maschinentisch der Werkzeugmaschine befestigt sein. Alternativ ist es möglich, die Lagerböcke 1b, 1c direkt an einem Werkzeugtisch oder dergleichen ortsfest anzubringen.

Zu dem Spannsystem gehört ferner eine Spanneinrichtung 2, um ein zu bearbeitendes Bauteil - hier die Linse L - zu fixieren. Die Spanneinrichtung 2 umfasst einen Grundkörper 3, der die Grundform einer flachen Ringscheibe besitzt und um eine horizontale Drehachse X drehbar in den Lagerböcken 1b, 1c des Gestells 1 gelagert ist. Hierzu weist der Grundkörper 3 zwei einander diametral gegenüberliegende Lagerzapfen 3a, 3b auf, die in Kugellagern 4, 5 gehalten sind, welche in die Lagerböcke 1b, 1c eingebaut sind.

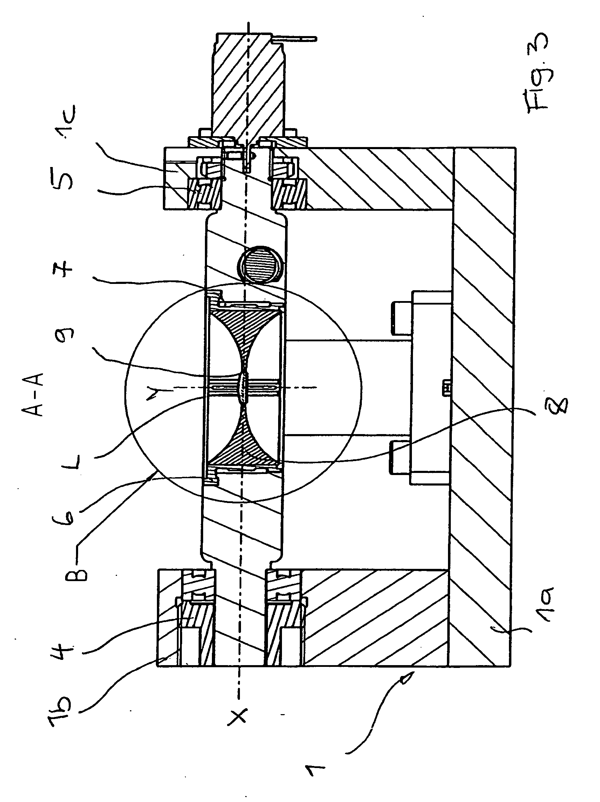

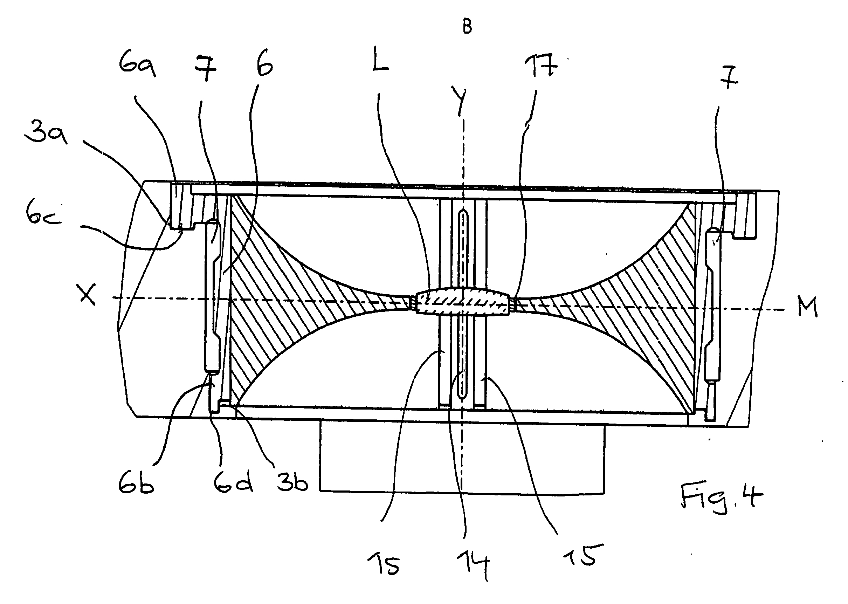

In die zentrale Ausnehmung des ringförmigen Grundkörpers 3 ist eine dünnwandige Dehnbüchse 6 eingesetzt. Wie insbesondere die Schnittdarstellungen der Figuren 3 und 4 deutlich zeigen, definiert die Dehnbüchse 6 zusammen mit der Innenwandung des Grundkörpers 3 einen Ringraum 7, welcher die dünne Wandung der Dehnbüchse 6 umgibt. Dieser Ringraum 7 ist an eine nicht dargestellte Druckmittelquelle angeschlossen, über die in dem Ringraum 7 ein Überdruck erzeugt werden kann, um die Dehnbüchse 6 elastisch nach innen zu verformen. Die Dehnbüchse 6 ist an ihren axialen Endbereichen formschlüssig mit dem Grundkörper 3 verbunden und verlötet. Dazu weist die Dehnbüchse 6 an ihren axialen Enden nach außen vorstehende Fortsätze 6a, 6b auf, an denen axiale Eingriffsnasen 6c, 6d ausgebildet sind, welche mit entsprechenden Ausnehmungen 3a, 3b des Grundkörpers 3 in Eingriff stehen.

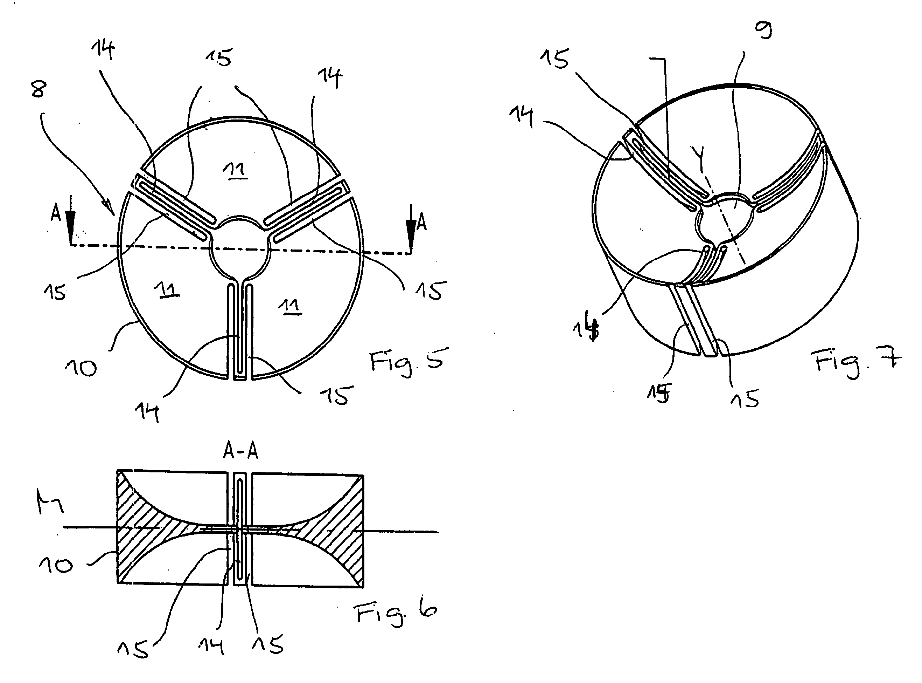

In die Dehnbüchse 6 ist ein Spannring 8 eingesetzt, der eine zentrale Aufnahme 9 für die zu spannende Linse L definiert. In die Aufnahme 9 kann ein Spannrahmen 17 als Träger für die Linse L eingesetzt sein. Der Spannring 8 besitzt, wie insbesondere die Figuren 5 bis 7 zeigen, eine zylinderische Grundform mit einer Außenfläche 10, die an der Innenwand der Dehnbüsche 6 flächig anliegt. In dem Spannring 8 ist ein Satz von - hier drei - radialen Schlitzen 14 ausgebildet, die sich ausgehend von der zentralen Aufnahme 9 hin radial nach außen bis kurz vor den äußeren Randbereich des Spannrings 8 erstrecken. Beidseitig von diesen radialen Schlitzen 14 ist jeweils ein weiteres Paar von Schlitzen 15 vorgesehen, die sich ausgehend von dem äußeren Randbereich des Spannrings 8 bis kurz vor die zentrale Aufnahme 9 erstrecken. Durch diese Anordnung von radialen Schlitzen 14, 15 wird der Spannring in drei Spannsegmente 11 unterteilt, die in Umfangsrichtung elastisch miteinander verbunden sind.

Wie insbesondere die Figuren 6 und 7 weiter erkennen lassen, sind in der Oberseite und der Unterseite des Spannrings 8 Vertiefungen 12, 13 vorgesehen, die etwa nach Art von konkaven Wölbungen ausgebildet sind. Die Anordnung ist so getroffen, dass der Spannring 8 eine in Bezug auf seine horizontale Mittelebene M im Wesentlichen symmetrische bikonkave Struktur besitzt. Aufgrund der flachen Ausbildung wird ausreichender Platz geschaffen, um eine gespannte Linse L von beiden Seiten der Spanneinrichtung 2 her frei bearbeiten zu können. Da die Drehachse X der Spanneinrichtung 2 in dieser Mittelebene liegt, kann eine Linse L durch Drehen der Spanneinrichtung 2 von der Oberseite der Spanneinrichtung 2 her sowohl an ihrer Oberseite, als auch an ihrer Unterseite frei bearbeitet werden, ohne dass hierzu aufwendige Umrüstmaßnahmen erforderlich werden.

Wenn mit der Spanneinrichtung 2 ein Bauteil L gespannt werden soll, wird der Ringraum 7 drucklos gestellt mit der Folge, dass eine Linse L in die Aufnahme 9 eingesetzt werden kann. Anschließend wird der Ringraum 7 mit einem Hydraulikmittel beaufschlagt und so ein Überdruck erzeugt, wodurch die dünne Wandung der Dehnbüchse 6 elastisch nach innen verformt wird, und auf diese Weise radiale Druckkräfte auf den Spannring 8 überträgt. Diese Druckkräfte bewirken, dass der Spannring 8 ebenfalls elastisch nach innen verformt wird, wobei sich die Aufnahme 9 verkleinert und die Linse L gespannt wird.

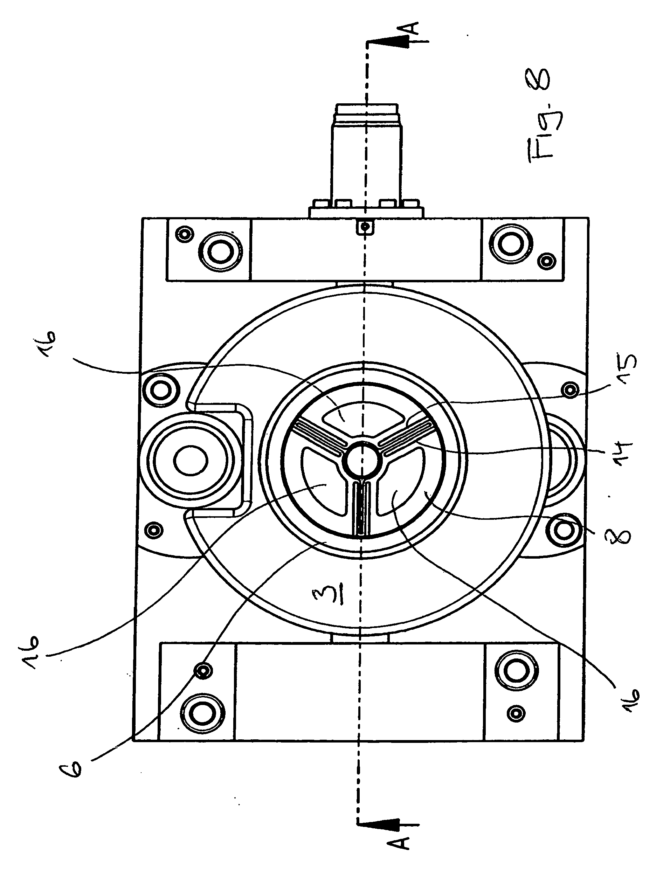

In der Figur 8 schließlich ist eine weitere Ausführungsform eines Spannsystems gemäß der vorliegenden Erfindung dargestellt. Diese entspricht dem zuvor erläuterten Spannsystem mit dem Unterschied, dass in dem Spannring 8 axiale Durchbrechungen 16 vorgesehen sind, die sich in den zwischen den radialen Schlitzen 14, 15 gebildeten Spannsegmenten 11 erstrecken und kreisringsegmentförmig ausgebildet sind. Durch diese Durchbrechungen 16 wird die Elastizität des Spannrings 8 weiter erhöht. Außerdem ist in die Aufnahme 9 ein Spannrahmen 17 eingesetzt, der die zu bearbeitende Linse L trägt.

## Patentansprüche

1. Spannsystem mit einem Gestell (1) und einer Spanneinrichtung (2), die eine zentrale Aufnahme (9) für ein zu spannendes Werkstück (L) aufweist und Spannmittel besitzt, um das Werkstück (L) in der Aufnahme (9) zu fixieren, wobei die Spanneinrichtung (2) an dem Gestell (1) schwenkbar angebracht und um eine Drehachse (X), die die Achse (Y) der Aufnahme (9) senkrecht kreuzt und durch die Aufnahme (9) verläuft, an dem Gestell (1) drehbar gelagert ist, **dadurch gekennzeichnet, dass** die Spanneinrichtung (2) eine die Aufnahme (9) umgebende dünnwandige Dehnbüchse (6) aufweist, welche von wenigstens einer Druckkammer (7) umgeben ist, die mit einem Hydraulikmittel beaufschlagbar ist, um die Dehnbüchse (6) radial nach innen zu verformen und damit Druckkräfte auf die Aufnahme (9) auszuüben, dass die Spanneinrichtung (2) einen Spannring (8) aufweist, der außenseitig von den Spannmitteln beaufschlagt wird und insbesondere in die Dehnbüchse (6) eingesetzt ist und der mittig die Aufnahme (9) definiert, und dass der Spannring (8) an seiner Ober- und seiner Unterseite jeweils eine konkave Auswölbung (12, 13) aufweist, so dass der Spannring (8) insgesamt ein bikonkaves Bauteil bildet.

2. Spannsystem nach Anspruch 1, **dadurch gekennzeichnet, dass** die Drehachse (X) die Aufnahme (9) in Bezug auf deren Längsachse (Y) etwa mittig kreuzt.

3. Spannsystem nach Anspruch 1 oder 2, **dadurch gekennzeichnet, dass** in die Aufnahme (9) ein ringförmiger Spannrahmen (17) eingesetzt ist.

4. Spannsystem nach einem der vorhergehenden Ansprüche, **dadurch gekennzeichnet, dass** in dem Spannring (8) mehrere und insbesondere drei zu der Aufnahme (9) hin offene radiale Schlitze (14) ausgebildet sind, wobei die Schlitze vorzugsweise gleichmäßig verteilt entlang des Umfangs des Spannrings (8) vorgesehen sind, und wobei insbesondere beidseitig der zu der Aufnahme (9) hin offenen radialen Schlitze (14) jeweils wenigstens ein zum Außenrand des Spannrings (8) hin offener radialer Schlitz (15) ausgebildet sind.

5. Spannsystem nach Anspruch 4, **dadurch gekennzeichnet, dass** sich die radialen Schlitze (14, 15) über nahezu die gesamte radiale Strecke zwischen dem äußeren Rand des Spannrings (8) und der Aufnahme (9) erstrecken und/oder dass der Spannring (8) in den zwischen den zu der Aufnahme (9) hin offenen radialen Schlitzen (14) gelegenen Bereichen axiale Durchbrechungen aufweisen, die insbesondere kreisringsegmentförmig ausgebildet sind.

6. Spannsystem nach einem der vorhergehenden Ansprüche, **dadurch gekennzeichnet, dass** der Spannring (8) symmetrisch zu der senkrecht durch seine Achse (Y) verlaufenden Mittelebene ausgebildet ist.

7. Spanneinrichtung für die Verwendung in einem Spannsystem nach einem der vorhergehenden Ansprüche, die eine zentrale Aufnahme (9) für ein zu spannendes Werkstück (L) aufweist und Spannmittel besitzt, um das Werkstück (L) in der Aufnahme (9) zu fixieren wobei sie um eine Drehachse (X), die die Achse (Y) der Aufnahme senkrecht kreuzt und durch die Aufnahme (9) verläuft, an einem Gestell (1) eines Spannsystems drehbar gelagert werden kann, **dadurch gekennzeichnet, dass** die Spanneinrichtung (2) eine die Aufnahme (9) umgebende dünnwandige Dehnbüchse (6) aufweist, welche von wenigstens einer Druckkammer (7) umgeben ist, die mit einem Hydraulikmittel beaufschlagbar ist, um die Dehnbüchse (6) radial nach innen zu verformen und damit Druckkräfte auf die Aufnahme (9) auszuüben, dass die Spanneinrichtung (2) einen Spannring (8) aufweist, der außenseitig von den Spannmitteln beaufschlagt wird und insbesondere in die Dehnbüchse (6) eingesetzt ist und der mittig die Aufnahme (9) definiert, und dass der Spannring (8) an seiner Ober- und seiner Unterseite jeweils eine konkave Auswölbung (12, 13) aufweist, so dass der Spannring (8) insgesamt ein bikonkaves Bauteil bildet.

8. Spanneinrichtung nach Anspruch 7, **dadurch gekennzeichnet, dass** in dem Spannring (8) mehrere und insbesondere drei zu der Aufnahme (9) hin offene radiale Schlitze (14) ausgebildet sind, wobei die Schlitze (14) vorzugsweise gleichmäßig verteilt entlang des Umfangs des Spannrings (8) vorgesehen sind, und wobei insbesondere beidseitig der zu der Aufnahme (9) hin offenen radialen Schlitze (14) jeweils wenigstens ein zum Außenrand des Spannrings (8) hin offener radialer Schlitz (15) ausgebildet sind.

9. Spanneinrichtung nach Anspruch 8, **dadurch gekennzeichnet, dass** sich die radialen Schlitze (14, 15) über nahezu die gesamte radiale Strecke zwischen dem äußeren Rand des Spannrings (8) und der Aufnahme (9) erstrecken.

10. Spanneinrichtung nach Anspruch 8 oder 9, **dadurch gekennzeichnet, dass** der Spannring (8) in den zwischen den zu der Aufnahme (9) hin offenen radialen Schlitzen (14) gelegenen Bereichen axiale Durchbrechungen (16) aufweisen.

11. Spanneinrichtung nach Anspruch 10, **dadurch gekennzeichnet, dass** die Durchbrechungen (16) kreisringsegmentförmig ausgebildet sind.

12. Spanneinrichtung nach einem der Ansprüche 7 bis 11, **dadurch gekennzeichnet, dass** der Spannring (8) symmetrisch zu der senkrecht durch seine Achse (Y) verlaufenden Mittelebene ausgebildet ist.

## Claims

1. A clamping system comprising a stand (1) and a clamping device (2) which has a central retainer (9) for a workpiece (L) to be clamped and has clamping means for fixing the workpiece (L) in the retainer (9), the clamping device (2) being attached pivotably to the frame (1) and being mounted rotatably about a rotation axis (X) which crosses the axis (Y) of the retainer (9) perpendicularly and extends through the retainer (9), **characterised in that** the clamping device (2) has a thin-walled extensible bush (6) surrounding the retainer (9) and which is surrounded by at least one pressure chamber (7) which can be charged with a hydraulic means in order to deform the extensible bush (6) radially inwards and so to exert compressive forces on the retainer (9), that the clamping device (2) has a clamping ring (8) to which clamping means are applied on the outside and in particular is inserted into the extensible bush (6) and which defines the retainer (9) centrally, and that the clamping ring (8) has a concave slot (12, 13) respectively on its upper and its lower side so that the clamping ring (8) forms overall a biconcave component.

2. The clamping system according to Claim 1, **characterised in that** the rotation axis (X) crosses the retainer (9) approximately centrally in relation to its longitudinal axis (Y).

3. The clamping system according to Claim 1 or 2, **characterised in that** an annular clamping frame (17) is inserted into the retainer (9).

4. The clamping system according to any of the preceding claims, **characterised in that** a number of, and in particular three, radial slots (14) open towards the retainer (9) are formed in the clamping ring (8), the slots preferably being provided distributed evenly along the circumference of the clamping ring (8), at least one radial slot (15) open towards the outer edge of the clamping ring (8) being formed respectively in particular on both sides of the radial slots (14) open towards the retainer (9).

5. The clamping system according to Claim 4, **characterised in that** the radial slots (14, 15) extend over almost the whole radial distance between the outer edge of the clamping ring (8) and the retainer (9) and/or that the clamping ring (8) has in the regions located between the radial slots (14) open towards the retainer (9) axial through holes which are in particular in the form of circular ring segments.

6. The clamping system according to any of the preceding claims, **characterised in that** the clamping ring (8) is formed symmetrically to the centre plane running perpendicularly through its axis (Y).

7. A clamping device for use in a clamping system according to any of the preceding claims which has a central retainer (9) for a workpiece (L) to be clamped and has clamping means for fixing the workpiece (L) in the retainer (9), said clamping device being able to be mounted rotatably on a frame (1) of a clamping system about a rotation axis (X) which crosses the axis (Y) of the retainer perpendicularly and passes through the retainer (9), **characterised in that** the clamping device (2) has a thin-walled extensible bush (6) surrounding the retainer (9) and which is surrounded by at least one pressure chamber (7) which can be charged with a hydraulic means in order to deform the extensible bush (6) radially inwards and so exert compressive forces on the retainer (9), that the clamping device (2) has a clamping ring (8) to which the clamping means are applied from the outside, and is inserted in particular into the extensible bush (6), and which defines the retainer (9) centrally, and that the clamping ring (8) has a concave slot (12, 13) respectively on its upper and its lower side so that the clamping ring (8) overall forms a biconcave component.

8. The clamping device according to Claim 7, **characterised in that** a number of, and in particular three, radial slots (14) open towards the retainer (9) are formed in the clamping ring (8), the slots (14) preferably being provided distributed evenly along the circumference of the clamping ring (8), and at least one radial slot (15) open towards the outer edge of the clamping ring (8) being formed respectively, in particular on both sides of the radial slots (14) open towards the retainer (9).

9. The clamping device according to Claim 8, **characterised in that** the radial slots (14, 15) extend over almost the whole radial distance between the outer edge of the clamping ring (8) and the retainer (9).

10. The clamping device according to Claim 8 or 9, **characterised in that** the clamping ring (8) has axial through holes (16) in the regions located between the radial slots (14) open towards the retainer (9).

11. The clamping device according to Claim 10, **characterised in that** the through holes (16) are in the form of circular ring segments.

12. The clamping device according to any of Claims 7 to 11, **characterised in that** the clamping ring (8) is formed symmetrically to the centre plane running perpendicularly through its axis (Y).

## Revendications

1. Système de serrage avec un châssis (1) et un dispositif de serrage (2) équipé d'un support de fixation central (9) pour la pièce d'oeuvre (L) à serrer et d'un moyen de serrage afin de fixer la pièce d'oeuvre (L) dans le support de fixation (9), le dispositif de serrage (2) étant monté pivotant sur le châssis (1) et autour d'un axe de rotation (X) sur le châssis (1) qui croise l'axe (Y) du support de fixation (9) perpendiculairement en passant par le support de fixation (9), **caractérisé en ce que** le dispositif de serrage (2) présente, autour du support de fixation (9), une douille d'extension (6) à parois minces, laquelle est entourée d'une chambre de pression (7) qui peut être alimentée avec un agent hydraulique afin de déformer la douille d'extension (6) radialement vers l'intérieur et ainsi exercer des forces de pression sur le support de fixation (9), que le dispositif de serrage (2) présente une bague de serrage (8) activée du côté extérieur du moyen de serrage et, plus particulièrement, est placée dans la douille d'extension (6) et qui définit en son centre le support de fixation (9), et que la bague de serrage (8) présente une déformation concave (12, 13) de son côté supérieur et inférieur de façon à ce que la bague de serrage (8) forme en tout une pièce biconcave.

2. Système de serrage selon la revendication 1, **caractérisé en ce que** l'axe de rotation (X) croise le support de fixation (9) de façon relativement centrique par rapport à son axe longitudinal (Y).

3. Système de serrage selon les revendications 1 ou 2, **caractérisé en ce qu'**un cadre de serrage (17) de forme circulaire est placé dans le support de fixation (9).

4. Système de serrage selon l'une des revendications précédentes, **caractérisé en ce que** la bague de serrage (8) est dotée de plusieurs ou, plus particulièrement, trois fentes radiales (14) ouvertes vers le support de fixation (9), les fentes étant de préférence distribuées également tout autour de la bague de serrage (8), et plus particulièrement, au moins une fente radiale (15) ouverte vers le rebord extérieur de la bague de serrage (8) étant formée de chaque côté de chacune des fentes radiales (14) ouvertes vers le support de fixation (9).

5. Système de serrage selon la revendication 4, **caractérisé en ce que** les fentes radiales (14, 15) s'étendent sur la presque totalité de la distance radiale entre le rebord extérieur de la bague de serrage (8) et le support de fixation (9) et/ou que la bague de serrage (8) présente, dans les zones situées entre les fentes radiales (14) ouvertes vers le support de fixation (9), des passages axiaux qui sont plus particulièrement formés en segments d'anneau circulaire.

6. Système de serrage selon l'une des revendications précédentes, **caractérisé en ce que** la bague de serrage (8) est formée de façon symétrique au plan central qui s'étend perpendiculairement à son axe (Y).

7. Dispositif de serrage pour l'utilisation dans un système de serrage selon l'une des revendications précédentes équipé d'un support de fixation central (9) pour la pièce d'oeuvre (L) à serrer et d'un moyen de serrage afin de fixer la pièce d'oeuvre (L) dans le support de fixation (9), le dispositif de serrage (2) étant monté autour d'un axe de rotation (X) qui croise l'axe (Y) du support de fixation (9) perpendiculairement en passant par le support de fixation (9), pouvant être monté pivotant sur le châssis (1), **caractérisé en ce que** le dispositif de serrage (2) présente, autour du support de fixation (9), une douille d'extension (6) à parois minces, laquelle est entourée d'une chambre de pression (7) qui peut être alimentée avec un agent hydraulique afin de déformer la douille d'extension (6) radialement vers l'intérieur et ainsi exercer des forces de pression sur le support de fixation (9), que le dispositif de serrage (2) présente une bague de serrage (8) activée du côté extérieur du moyen de serrage et, plus particulièrement, est placée dans la douille d'extension (6) et qui définit en son centre le support de fixation (9), et que la bague de serrage (8) présente une déformation concave (12, 13) de son côté supérieur et inférieur de façon à ce que la bague de serrage (8) forme en tout une pièce biconcave.

8. Dispositif de serrage selon la revendication 7, **caractérisé en ce que** la bague de serrage (8) est dotée de plusieurs ou, plus particulièrement, trois fentes radiales (14) ouvertes vers le support de fixation (9), les fentes (14) étant de préférence distribuées également tout autour de la bague de serrage (8), et plus particulièrement, au moins une fente radiale (15) ouverte vers le rebord extérieur de la bague de serrage (8) étant formée de chaque côté de chacune des fentes radiales (14) ouvertes vers le support de fixation (9).

9. Dispositif de serrage selon la revendication 8, **caractérisé en ce que** les fentes radiales (14, 15) s'étendent sur la presque totalité de la distance radiale entre le rebord extérieur de la bague de serrage (8) et le support de fixation (9).

10. Dispositif de serrage selon les revendications 8 ou 9, **caractérisé en ce que** la bague de serrage (8) présente, dans les zones situées entre les fentes radiales (14) ouvertes vers le support de fixation (9), des passages axiaux (16).

11. Dispositif de serrage selon les revendications 10, **caractérisé en ce que** les passages axiaux sont formés en segments d'anneau circulaire.

12. Dispositif de serrage selon l'une des revendications 7 à 11, **caractérisé en ce que** la bague de serrage (8) est formée de façon symétrique au plan central qui s'étend perpendiculairement à son axe (Y).
